# EUROPEAN PATENT APPLICATION

(11) **EP 3 043 569 A1**
(43) Date of publication of application: **13.07.2016**
(21) Application number: 15150427.1
(22) Date of filing: 08.01.2015
(51) Int. Cl.: H04N 21/43

(54) **Temporal relationships of media streams**

(71) Applicant: Koninklijke KPN N.V., 2516 CK The Hague (NL); Nederlandse Organisatie voor toegepast- natuurwetenschappelijk onderzoek TNO, 2595 DA 's-Gravenhage (NL)
(72) Inventor: Thomas, Emmanuel, 2611 KP Delft (NL); Stokking, Hans Maarten, 2292 CH Wateringen (NL)
(74) Representative: Wuyts, Koenraad Maria

(57) **Abstract**

A method of determining temporal relationships of video streams relative to a reference, such as another video stream, which method comprises the steps of:
- detecting at least one event in each video stream,
- determining, for each detected event, event properties comprising a time of occurrence of the event,
- determining, for each detected event, its semantic classification by using the event properties to select a semantic classification from a set of semantic classifications,
- matching at least one event in a video stream with an event having the same meaning in the reference, and
- determining, for each matched event, the difference in its times of occurrence in the respective video streams.

The method may further comprise the step of:
- adjusting at least one video stream containing a matched event so as to decrease the difference in the times of occurrence of the matched events.

The step of adjusting at least one video stream may comprise adjusting a playout rate of the at least one video stream so as to synchronise the video stream with the reference.

## Description

### Field of the Invention

The present invention relates to temporal relationships of media streams. More in particular, the present invention relates to a method of determining temporal relationships of media streams, such as video streams, which temporal relationships may be used for synchronising the media streams. The present invention further relates to a software program product and a system for determining temporal relationships of media streams.

### Background of the Invention

Media content such as video content and audio content is commonly delivered to users in digital form. If media content has a temporal aspect, and in particular if it is associated with a timeline which indicates how the media content is to be played out or otherwise processed over time, such a digital form is typically referred to as a media stream. Examples of media streams include video streams such as camera-recorded or computer-rendered streams, audio streams such as microphone-recorded streams, timed text streams such as subtitle streams or social media streams, timed events streams which show an advertisement image or perform an action at a receiver, and multimedia streams comprising different types of media streams.

There is often a need to compare and/or synchronize the playout of a media stream with a reference playout. Such a reference playout may take various forms, including but not limited to:
a) the playout of the same media stream at another destination,
b) the playout of a further media stream, and
c) clock information indicating a reference timing of the playout of the media stream.
These use cases are known *per se* from the field of media synchronization, and may also be referred to as:
a) inter-destination synchronization,
b) inter-stream synchronization, and
c) clock synchronization, respectively.
Together with related synchronization use cases and techniques, these synchronization use cases will in short be referred to as media synchronization.

For example, inter-destination media synchronization may involve carrying out a synchronization between the playout of content at different destinations. Here, the playout at one destination may constitute a reference for the playout at another destination. With inter-stream synchronization, the playout of one media stream, e.g. a video stream, may constitute a reference for the playout of another media stream, e.g. an audio stream, or vice versa, e.g. to achieve lip synchronization. With intra-stream synchronization, the original timing of a recording, e.g. 25 frames per second or 44 kHz audio, may constitute a reference for the playout of a media stream in time. With event-based synchronization, an original timing of an event, e.g., the timing of questions to an audience in a play-along quiz show, may constitute a reference for an actual presentation of such events during the broadcast of such a quiz show.

It is noted that media synchronization may be carried out to a level where the playout of a media stream is fully synchronized with a reference playout, or it may at least be intended to carry out the synchronization to said level. However, it may also be desired to perform synchronization to a level other than said full synchronization. For example, if it is known that a video frame buffer causes a 25ms delay further downstream in a media processing chain, it may be desirable to synchronize a video stream and an audio stream to the level of the video stream being ahead of the audio stream by 25 ms. Accordingly, media synchronization may purposefully produce a predetermined time delay to establish a target level of synchrony. In addition, humans typically don't perceive small synchronisation errors so that perfect synchronisation is often not required.

Media synchronization may involve performing one or more synchronization actions. For example, if the playout of the media stream by the playout device is ahead of the reference playout, the former playout may need to be delayed. Conversely, if the playout of the media stream by the playout device is behind the reference playout, the former playout may need to be advanced. Synchronization actions may take various forms, including seeking forward or backward in the media stream (also referred to as 'jumping') or adjusting the playout rate (also referred to as 'adaptive media playout'). Synchronization actions may be performed by the playout device, but also by another entity, e.g. the media source or an intermediate node, residing in the network. The performing of the synchronization action typically causes a playout distortion in the playout of the media stream. Here, the term 'playout distortion' refers to an irregularity in the playout caused by the synchronization action, resulting in a deviation from the regular, typically continuous, playout of the media stream at the regular playout rate. The playout distortion may be perceptible to a user experiencing the playout of the media stream. The perceptibility may depend on a magnitude of the adjustment of the level of synchronicity as effected by the synchronization action. For example, it has been found that changes in video playout rate below 25% may not be perceptible to a user under certain conditions. An implementation of adaptive media playout is described in the publication *"*Adaptive playout for real-time media streaming" authored by Kalman et al, Circuits and Systems, ISCAS 2002, Vol. 1, pp. I-45, IEEE, 2002.

The ability to synchronize media streams will of course depend on the availability of common reference points in the video streams. Time codes or indices are often embedded in video streams to indicate the (relative) points in time at which scenes or video segments begin. However, if such time codes are not present, or are changed or lost during the transmission of the media stream, then it is much more difficult to synchronize the video streams. It has been suggested in prior art documents to use event detection to index video streams. United States Patent Application US 2014/0064693, for example, discloses extracting events from video streams and determining index values identifying the locations of the detected events. This known technique relies on optical character recognition (OCR) of letters and numbers in the video, such as numbers indicating the time (clock) or the round of a match. When such numbers are missing from the video images, events cannot be detected.

United States Patent Application US 2014/0313413 discloses time synchronization of the videos of a plurality of cameras. Visual event detection means detect changes in image brightness, changes in the posture of persons, etc. to generate visual event detection information, which includes time information, to synchronize the times of the videos. Even actions, such as raising a hand, may be used to detect an event. However, the techniques of US 2014/0313413 require that all video streams to be synchronized contain the same detectable event, such as raising an arm. If due to different camera positions and/or different camera angles not all video streams contain the features of such events, the synchronization will fail.

### Summary of the Invention

It is an object of the present invention to solve these and other problems of the prior art by providing a method of determining a temporal relationship of media streams, in particular video streams relative to a reference, which does not depend on all media streams containing the same features.

Accordingly, the present invention provides a method of determining a temporal relationship of a video stream relative to a reference, which method may comprise the steps of:
- detecting at least one event in the video stream,
- determining, for each detected event, event properties comprising a time of occurrence of the event in the video stream,
- determining, for each detected event, its semantic classification by using the event properties to select a semantic classification from a set of semantic classifications,
- matching at least one event in the video stream with an event having the same semantic classification in the reference, and
- determining, for each matched event, the difference in its respective times of occurrence in the video stream and in the reference.
By determining for each event its meaning by selecting a semantic classification, it is possible to match events having the same meaning, even if those events do not share all their properties. As a result, it is possible to determine a temporal relationship of video streams originating from cameras having substantially different positions and/or viewing angles, and therefore of video streams which may contain significantly different images of the same event.

The method steps outlined above may be carried out immediately one after the other, or may be separated in time. For example, the step of determining, for each detected event, its semantic classification, and the step of matching at least one event in the video stream with an event having the same semantic classification in the reference, could be applied to collections of event properties which have been derived from video streams well before these two steps were carried out. The step of determining, for each detected event, its semantic classification may also be carried out while postponing the subsequent matching step.

The reference may be another video stream. In such an embodiment, the steps of detecting at least one event, determining event properties and determining a semantic classification of the detected event may also be applied to the other video stream so as to be able to match semantic classifications. If the reference is constituted by another video stream, the method of the present invention allows a temporal relationship between video streams to be determined. However, the reference may also be a record comprising events with their semantic classifications and times of occurrence. That is, in such an embodiment the reference may have been derived from a video stream and contain all the information relevant for determining temporal relationships, but may not contain the actual video images. Such a reference may be a common reference stored in a server, for example.

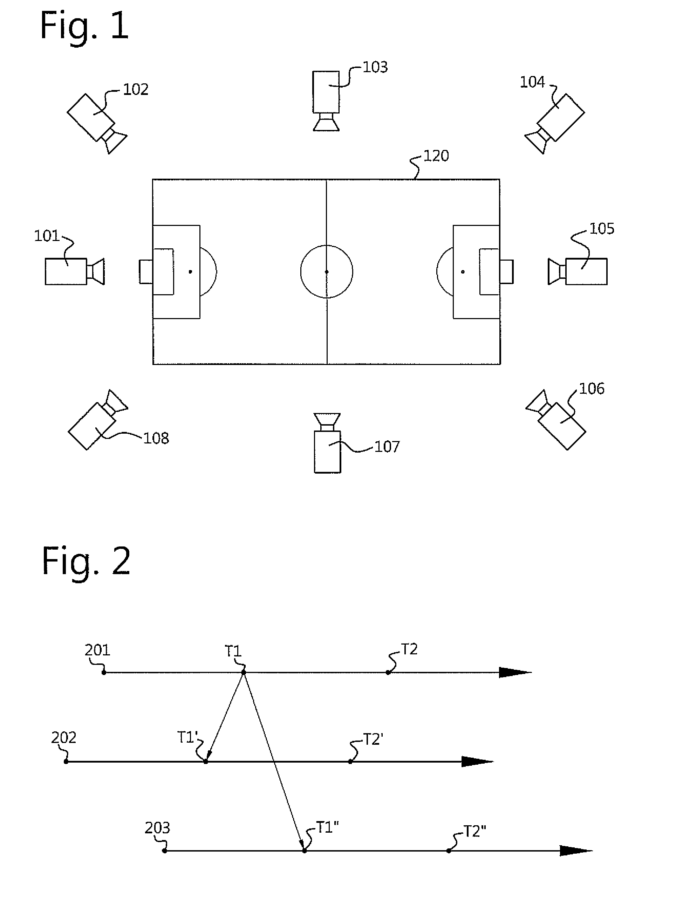

It is noted that the article by C. Wu et al., "Sports Video Analysis: Semantics Extraction, Editorial Content Creation and Adaptation", Journal of Multimedia, Vol. 4, No. 2, April 2009, discloses event detection and semantics extraction in sports videos. Figure 1 of Wu's article provides a useful overview of low-level features, mid-level models and high-level semantics. Some of the techniques mentioned in Wu's article may advantageously be used in the present invention. Wu fails to disclose or suggest using semantic classification to determine temporal relationships of dissimilar videos, that is, videos which do not (or not all) share some low-level features.

It is preferred that the semantic classifications are predefined. That is, the semantic classifications are based upon a priori knowledge. However, embodiments can also be envisaged in which the semantic classifications are determined during the analysis of the media streams and are therefore content-based. Those skilled in the art will envisage statistical methods allowing suitable semantic classifications to be made, based upon the video content.

In a preferred embodiment, multiple distinct sets of event properties may be used to select a single semantic classification. That is, two different sets of event properties or features may point to the same semantic classification, even though the properties or features may not be the same, or may not all be the same. At least some of the multiple distinct sets of event properties may even be disjunct, that is, these sets may not share any event properties. Of course two identical sets of event properties will point to the same semantic classification.

To determine the difference in the times of occurrence of events in the respective video streams it is possible to match a single event in the video streams. However, the accuracy of the determining of temporal relationships may be improved if the step of matching events comprises matching at least two events per video stream with events in the reference. By matching two or more events per video stream, the probability of detection errors is diminished.

In an advantageous embodiment, the step of matching two or more events per video stream may comprise averaging the differences in the times of occurrence of the events. As the detection of the time of occurrence of an event having a certain semantic classification may not be perfect, the accuracy of the time detection may be improved by pairwise averaging the times of occurrence. That is, for each event the difference in detected time of occurrence in the multiple media streams is determined, leading to a set of delay values, which set is then averaged to produce an average delay or time difference. However, other operations than averaging are possible, such as determining the median, so in general the step of matching events comprises using the differences in the times of occurrence, and preferably using these differences to produce a combined value. In some embodiments, two matched events in a single video stream may only be taken into account if the difference in their times of occurrence is smaller than a first threshold value. This may avoid any discrepancies between recording devices of which the clocks have slightly different speeds. That is, one clock may run fast relative to the other, resulting in discrepancies in the determined times of occurrence of events which are relatively far apart in time. In the same or other embodiments, two matched events in a single video stream may only be taken into account if the difference in their times of occurrence is greater than a second threshold value. This may avoid mistaken detections, for example mistakenly detecting a single event as two separate events.

In an advantageous embodiment, the method further comprises the step of adjusting the video stream so as to decrease the difference in the times of occurrence of the at least one matched event. By adjusting the video stream, or possibly the video streams, for example when the reference is constituted by a video stream, synchronisation of the video stream with the reference and/or with one or more video streams may be achieved.

In an embodiment, the step of adjusting the video stream comprises adjusting a playout rate of the video stream. If one stream is delayed relative to another stream, the delayed stream may "catch up" by speeding up its playout rate. There are several ways of doing this, for example increasing the playout rate during a period of time, skipping parts of the stream, or a combination thereof. Also, the points in time at which the delay is decreased may be chosen so as to minimize any disruption of the viewing experience. Additionally, or alternatively, the video stream which is ahead may be buffered so as to introduce a suitable delay, or its playout rate may be reduced, or backwards skipping may be used, or any combination of these techniques.

In the above explanation, a video stream has been used as an example, as the method of the present invention is based upon video analysis. However, the invention is not limited to video streams and also applies to media streams comprising audio and video, for example. Accordingly, the at least one video stream may comprise an associated audio stream. The associated audio stream may be constituted, for example, by the spoken commentary of a sports match and/or by the sound of the sports match.

The present invention further provides a software program product comprising instructions causing a processor to carry out the method steps described above. The software program product may further comprise a tangible carrier, such as a DVD or a USB memory stick, on which the instructions are stored. The software program product may also be stored on a server and be available for download from the Internet.

The present invention additionally provides a system for determining temporal relationships of video streams, which system may comprise:
- at least one playout device for playing out at least one video stream,
- a delay determination device for determining any time delay between the at least one video stream and a reference,
wherein the delay determination device is configured for:
- detecting at least one event in the at least one video stream,
- determining, for each detected event, event properties comprising a time of occurrence of the event in the video stream,
- determining, for each detected event, its semantic classification by using the event properties to select a semantic classification from a set of semantic classifications,
- matching at least one event in the at least one video stream with an event having the same semantic classification in the reference, and
- determining, for each matched event, the difference in its times of occurrence in the respective video streams.

The system according to the present invention offers the same advantages as the method. The system may further comprise an adjusting device configured for:
- adjusting at least one video stream containing at least one matched event so as to decrease the difference in the times of occurrence of the at least one matched event.
The adjusting device may be configured for adjusting playout rates of the at least one video stream. In an embodiment, each playout device may comprise an adjusting device, that is, there may be several adjustment devices, which receive information from the delay determination device, and which adjustment devices may be integral with the playout devices.

### Brief description of the drawings

The present invention will further be explained with reference to exemplary embodiments illustrated in the drawings, in which:
Fig. 1 schematically shows a sports field and a plurality of cameras for providing video streams related to a sports match;
Fig. 2 schematically shows a number of video streams which may be produced by the video cameras of Fig. 1;
Fig. 3 schematically shows sets of event features and related sematic classifications in accordance with the present invention;
Fig. 4 schematically shows a flow diagram of an embodiment of the method according to the present invention;
Fig. 5 schematically shows a system for determining temporal relationships of video streams according to the present invention; and
Fig. 6 schematically shows a software program product containing instructions for carrying out the method of the present invention.

### Detailed description of embodiments

In Fig. 1, a sports field 120 is shown to be surrounded by a number of video cameras 101 - 108. In the particular example of Fig. 1, eight cameras are shown, but this number is quite arbitrary, and in the present invention either less (for example three or four) or more (for example ten or twelve) cameras could be used. In addition to cameras, microphones may be used. In the example shown, the sports field 120 is a football field (or soccer field as it is called in North America) but fields or grounds suitable for other sports, such as baseball fields, cricket fields, rugby fields, basketball courts and swimming pools, may be used instead. The invention is not limited to sports and may also be used for military exercises, surveillance or road traffic control, for example.

The cameras 101-108 shown in Fig. 1 each have a different position and a different viewing angle relative to the sports field 120. As a result, they will each produce a different video image of the same event. In some video images the ball will be visible, for example, while in other images it will not be visible because a player is located between the ball and the camera. Postures of players (and of the referee) will also be different when viewed from different angles. This makes event recognition on the basis of image features more difficult, as video images of the same event will not share all features.

Some or all of the video images produced by the cameras 101-108 may be streamed to users who may have different types of user equipment (such as a television set, a laptop computer, a smartphone, a tablet computer, smart glasses, a smart watch, etc.), different internet service providers and/or different available bandwidths. As a result, events on the field 120 will not appear to all users at exactly the same moment in time. This is not a problem when all users viewing the match each use a single device and don't share their viewing experience with others. However, when a user views a match on two devices simultaneously, for example his television set for the overall view of the match and his smartphone for zooming in on special items or events, it is particularly annoying if the video streams of the two devices are not synchronized. Also when two users are viewing the same match at two different locations while sharing their experiences via social media or via a telephone call, it is very inconvenient if one user starts cheering for a goal that was not yet displayed on the other user's device.

Different delays in video streams are not only undesired when two or more users are watching the same sports game or another broadcast occasion. Also when an event in a video stream has to be viewed at a certain point in time it is important to determine the temporal relationship of the video stream with a reference, for example but not exclusively a "wall clock" (that is, absolute time). Such an event may be a clock ticking away the last seconds of the year on New Year's Eve, for example. It is therefore desired that the times of occurrence of events in the video stream or streams may be established, even when the video streams originate from different cameras which may record different features of the events.

It is noted that the time of occurrence of an event in a video stream may be a point in time, relative to the video stream, at which an event is present (e.g. played out) in the video stream. A time of occurrence of an event may then be expressed relative to a content time line, for example at 0:03.000 in a particular video stream. If the same event in another video stream (or in the reference) occurs at for example 0:05.000, then the video streams have a time difference of 2 seconds. Alternatively, or additionally, time of occurrence may be a point in absolute time (that is, "wall clock time") at which the event is present, e.g. played out. A time of occurrence of an event may then be expressed as, for example, 15:43:00.000. If the same event occurs in another video stream (or in the reference) at for example 15:43:02.000, then the video streams also have a time difference of 2 seconds.

Several video streams having different delays are schematically illustrated in Fig. 2. The video streams 201, 202 and 203 may originate, for example, from the cameras 101, 102 and 103 in Fig. 1, although the video streams may also originate from other sources. As is schematically shown in Fig. 2, the video streams are not aligned in time but have different delays. An event which occurs at time T1 in video stream 201 occurs later, at time T1', in video stream 202 and earlier, at time T1 in video stream 203. A similar spread of times of occurrence is shown for another event, which occurs in the three video streams at times T2, T2' and T2" respectively.

It will be clear that when the three video streams 201-203 are played out on three different devices (e.g. a television set, a laptop computer and a smartphone) for a single user or single group of users, any differences in the times of occurrence of the same event (such as T1, T1' and T1" in the present example) will be unpleasant. Although small time differences in the order of milliseconds will not be noticed, larger differences may disturb the viewing experience. In practice, time differences of a few seconds are possible, which are particularly unpleasant when a user wants to control a device on the basis of a video stream (e.g. switch channel, that is, switch video stream) only to find out that her decision to switch was based on outdated information.

The present invention aims to solve these problems by determining one or more temporal relationships between the video streams on the basis of events in the video streams, even when those events do not all share image features, as they were recorded by different cameras, for example.

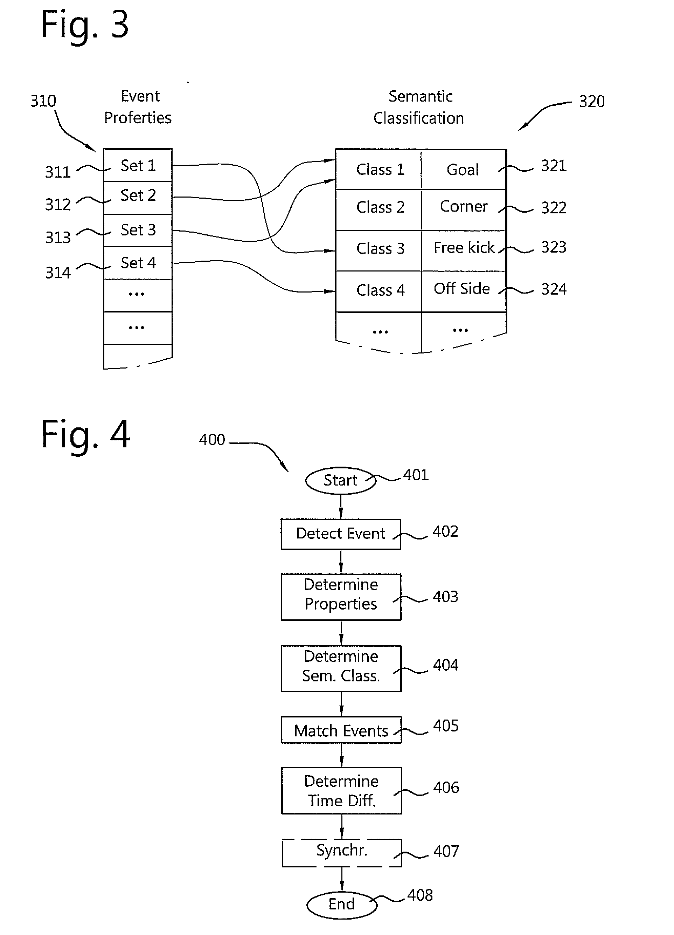

Fig. 3 schematically shows elements which can be used in the present invention: a first table 310 containing event properties and a second table 320 containing a sematic classification of those event properties.

The first table 310 contains sets of event properties: a first set 311, a second set 312, etc. Two or more sets may relate to the same event but originate in that case from different video streams. Each set of event properties contains properties pertaining to an event in a video stream. Those properties may comprise the time of occurrence of the event in the video stream and image features. The image features may be features extracted from images, such as background colour or colours, shapes, directions, etc. As mentioned above, the image features of video streams of the same event may differ significantly if they have been recorded with different cameras, making the recognition of a particular event in multiple video streams on the basis of image features alone sometimes impossible.

In accordance with the present invention, each set of event properties can be mapped onto a single semantic classification, while multiple sets may be mapped onto the same semantic classification (in mathematics this is called a surjection). For the first set of event properties 311 it is determined that it fits best in the third semantic class 323 labelled "Free Kick" in the example of Fig. 3. The second set of even properties 312 is mapped onto the first semantic classification 321 labelled "Goal". In the example shown, it is also determined that the third set of event properties 313 fits with the first semantic classification 321. Accordingly, it may be determined that the second set 312 and the third set 313 relate to the same event, as these sets have the same meaning "Goal". Accordingly, it may be determined on the basis of the semantic classification of the events that two sets having different properties may still relate to the same event.

In addition to the semantic classification, a further step may be carried out to determine that two sets of event properties relate to the same event. On the basis of the event property time of occurrence it may be determined what the time difference between two sets is, and it may only be concluded that two sets relate to the same event if the time difference is smaller than a threshold value. In the example of Fig. 3, although event properties sets 312 (set 2) and 313 (set 3) belong to the same semantic classification, it may be determined that they only relate to the same event if the times of occurrence of the two events are less than 30 seconds apart, for example. If they are more than 30 seconds apart, as in this example, then it may be concluded that event properties sets 312 and 313 relate to two different events, that is, two different goals. It will be understood that the threshold value that is applied will strongly depend on the type of event. Those familiar with sports will realize that there is typically more time between two goals in football than there is in basketball, for example. Additionally or alternatively, the threshold value may be based on information that the difference in time of occurrence of events between the stream and the reference should be within the threshold value, e.g. based on previous determined difference(s) in time of occurrence of one or more previous matched event(s), or because the maximum delay between events in the stream and the reference is known.

It is noted that the method or methods used for determining a semantic classification on the basis of features or properties may be known as such. The present invention may use such methods for event classification in order to determine temporal relationships in video streams. Examples of such methods are disclosed in G. Lavee et al., "Understanding Video Events: A Survey of Methods for Automatic Interpretation of Semantic Occurrences in Video", IEEE Transactions on Systems, Man and Cybernetics - Part C: Applications and Reviews, Vol. 39, No. 5, September 2009, which is herewith incorporated in this document.

It is further noted that in order to determine a semantic classification for all sets of event properties, it may be advantageous to provide a semantic classification labelled "Undetermined" or "Remaining" for events which do not fit into any of the other classifications and/or for which no semantic classification can be established.

An embodiment of the method according to the present invention is schematically illustrated in Fig. 4, where the method 400 starts with an initial step 401. In step 402, an event in a video stream is detected. It is noted that this step may be carried out multiple times for multiple video streams, and may also be carried out to produce a reference. In step 403, event properties are determined for each detected event, the event properties including a time of occurrence of the event. It is noted that this time of occurrence may be relative to the particular video stream (that is, relative to the content time line). Alternatively, or additionally, the time of occurrence may be determined relative to an absolute or common time reference ("wall clock"), to facilitate a comparison of the times of occurrence in the various video streams.

In step 404, a semantic classification is determined for each detected event, on the basis of the event properties that were determined in step 403. Subsequently, in step 405, the semantic classifications are used to match at least one event in the video stream with an event having the same semantic classification in a reference, which reference may be another video stream or a record of events and their properties.

In step 406, the differences of the times of occurrence of the matched events are determined. That is, for each matched event it is determined what the difference is between the time of occurrence in the video stream in question and in the reference. This difference provides a temporal relationship between the video stream and the reference. In optional step 407, this difference in the respective time of occurrence may be used to synchronize the video stream in question with the reference, for example by adjusting the playout rate of the video stream. The method ends in step 408.

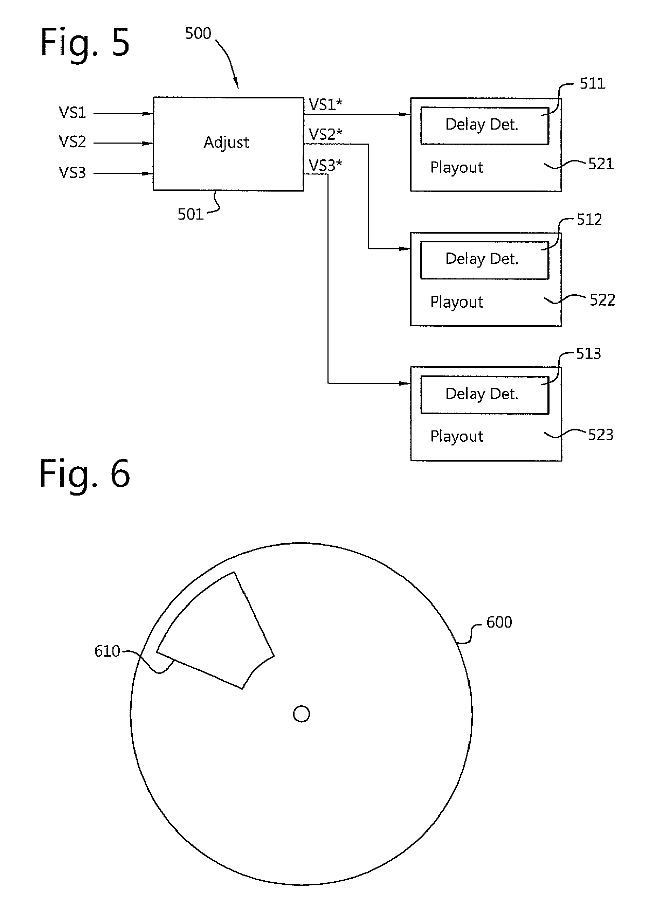

A system for determining a temporal relationship between a video stream and a reference according to the present invention is schematically illustrated in Fig. 5. The system 500 is shown to comprise an adjustment device 501, a first playout device 521, a second playout device 522 and a third playout device 523. The system 500 further comprises a first delay determination device 511, a second delay determination device 512 and a third delay determination device 513. In the embodiment shown, the delay determination devices 511-513 are integral with the playout devices 521-523 respectively, but in other embodiments the delay determination devices may be separate units. The playout devices may be television sets, (laptop or desktop) computers, smartphones, tablet computers, smart glasses, smart watches and/or other devices.

The adjustment device 501 receives, in the example shown, three video streams VS1, VS2 and VS3, which may correspond with the video streams 201-203 in Fig. 2. These video streams are time adjusted in response to signals from the delay determination devices 511-513 so as to produce time adjusted video streams VS1*, VS2* and VS3*. The delay determination devices 511-513 determine any (relative and/or absolute) delay of the three input video streams VS1-VS3 according to the present invention, that is, by detecting events, determining event properties, determining a semantic classification for each set of event properties, matching events having the same semantic classification and determining the differences in times of occurrence of the matched events. In determining the delay, the delay determination devices 511-513 may also take a maximum time difference into account, thus preventing a match of semantically identical events which are too far apart in time. In alternative embodiments (not shown), the adjustment device may be distributed over multiple adjustment devices, e.g. each receiving a subset of the streams.

A software program product is schematically shown in Fig. 6. The software program product 600 may comprise a CD or a DVD, for example, on which software 610 is stored. The software 610 may contain instructions for causing a processor to carry out the method of the present invention.

It will be understood that the description of the invention given above is not intended to limit the invention in any way. Singular nouns and the articles "a" and "an" are of course not meant to exclude the possibility of plurals. Devices mentioned in this document, may be replaced with their successors, even if these successors are not yet known at the time of writing. As is well established in the law of patents, the abstract should never be used to limit the scope of the claims, and neither should reference numbers in the claims.

It will further be understood by those skilled in the art that the present invention is not limited to the embodiments mentioned above and that many additions and modifications are possible without departing for the scope of the invention as defined in the appending claim.

## Claims

1. A method of determining a temporal relationship of a video stream relative to a reference, the method comprising the steps of:
- detecting at least one event in the video stream,
- determining, for each detected event, event properties comprising a time of occurrence of the event in the video stream,
- determining, for each detected event, its semantic classification by using the event properties to select a semantic classification from a set of semantic classifications,
- matching at least one event in the video stream with an event having the same semantic classification in the reference, and
- determining, for each matched event, the difference in its respective times of occurrence in the video stream and in the reference.

2. The method according to claim 1, wherein the reference is another video stream.

3. The method according to claim 1, wherein the reference is a record comprising events with their semantic classifications and times of occurrence.

4. The method according to claim 1 or 2, wherein multiple distinct sets of event properties may be used to select a single semantic classification.

5. The method according to claim 4, wherein at least some of the multiple distinct sets of event properties are disjunct.

6. The method according to any of the preceding claims, wherein the step of matching events comprises matching at least two events per video stream with events in the reference.

7. The method according to claim 6, wherein the step of matching events comprises using the differences in the times of occurrence of the at least two events.

8. The method according to claim 7, wherein using the differences in the times of occurrence of the at least two events comprises averaging said differences.

9. The method according to any of the preceding claims, further comprising the step of adjusting the video stream so as to decrease the difference in the times of occurrence of the at least one matched event.

10. The method according to claim 9, wherein the step of adjusting the video stream comprises adjusting a playout rate of the video stream.

11. The method according to any of the preceding claims, wherein the semantic classifications relate to events in a sports match or in road traffic.

12. A software program product for carrying out the method according to any of the preceding claims.

13. A system for determining a temporal relationship of a video stream relative to a reference, the system comprising:
- at least one playout device for playing out at least one video stream, and
- a delay determination device for determining any time delay between the at least one
video stream and a reference,
wherein the delay determination device is configured for:
- detecting at least one event in the at least one video stream,
- determining, for each detected event, event properties comprising a time of occurrence of the event in the video stream,
- determining, for each detected event, its semantic classification by using the event properties to select a semantic classification from a set of semantic classifications,
- matching at least one event in the at least one video stream with an event having the same semantic classification in the reference, and
- determining, for each matched event, the difference in its respective times of occurrence in the at least one video stream and the reference.

14. The system according to claim 13, further comprising an adjusting device configured for adjusting at least one video stream containing a matched event so as to decrease the difference in the times of occurrence of the at least one matched event, the adjusting device preferably being configured for adjusting playout rates of the at least one video stream.

15. The system according to claim 13 or 14, wherein at least one playout device is configured for communicating to the delay determination device at which point in time, relative to a common clock, an event occurred in the video stream played out by the playout device.
